# EUROPÄISCHE PATENTSCHRIFT

(11) **EP 3 160 804 B1**
(45) Veröffentlichungstag und Bekanntmachung des Hinweises auf die Patenterteilung: **29.07.2020**
(21) Anmeldenummer: 15718236.1
(22) Anmeldetag: 27.04.2015
(51) Int. Cl.: B60T 8/40, H02K 7/06, B60T 13/74, B60T 17/02

(54) **DRUCKERZEUGER FÜR EINE HYDRAULISCHE FAHRZEUGBREMSANLAGE**
PRESSURE GENERATOR FOR A HYDRAULIC VEHICLE BRAKE SYSTEM
GÉNÉRATEUR DE PRESSION POUR SYSTÈME DE FREINAGE HYDRAULIQUE DE VÉHICULE

(30) Priorität: 27.06.2014 DE 102014212409
(43) Veröffentlichungstag der Anmeldung: 03.05.2017
(73) Patentinhaber: Robert Bosch GmbH, 70442 Stuttgart (DE)
(72) Erfinder: TANDLER, Juergen, 87629 Fuessen (DE); MAYR, Matthias, 87549 Rettenberg (DE); WEH, Andreas, 87477 Sulzberg (DE)
(86) Internationale Anmeldenummer: PCT/EP2015/059020
(87) Internationale Veröffentlichungsnummer: WO 2015/197234

(56) Entgegenhaltungen:
- WO-A1-01/11262
- WO-A1-02/057124
- WO-A1-02/099312
- WO-A1-2014/086517
- DE-A1- 10 255 198
- DE-A1- 19 851 670
- FR-A1- 2 860 474
- GB-A- 2 377 740
- JP-A- 2010 269 795
- US-A1- 2002 185 340

## Beschreibung

Die Erfindung betrifft einen Druckerzeuger für eine hydraulische Fahrzeugbremsanlage mit den Merkmalen des Oberbegriffs des Anspruchs 1. Der Druckerzeuger ist insbesondere für eine Fremdkraftbremsanlage vorgesehen, er ist aber beispielsweise auch für Schlupfregelungen einsetzbar.

### Stand der Technik

Bekannt sind Schraubgetriebe. Diese weisen beispielsweise eine Spindel und eine Spindelmutter, deren Innengewinde mit einem Gewinde der Spindel in Eingriff steht, auf. Durch einen Drehantrieb der Spindelmutter oder der Spindel wird das andere Teil, also die Spindel oder die Spindelmutter, axial verschoben. Außer mit gleitenden Gewinden gibt es Gewindetriebe auch mit Wälzkörpern beispielsweise als Kugel- oder Rollengewindetriebe. Allgemein kann die Spindelmutter oder die Spindel auch als drehbares, axialfestes und ein Gewinde aufweisendes Bauteil eines Schraubgetriebes und das andere Teil, also die Spindel oder die Spindelmutter als axialverschiebbares, drehfestes und ein Gegengewinde aufweisendes Bauteil eines Schraubgetriebes aufgefasst werden. Das Gewinde und das Gegengewinde stehen unmittelbar und mittelbar beispielsweise über Wälzkörper in Eingriff, so dass ein Drehantrieb des drehbaren Bauteils des Schraubgetriebes das axial verschiebbare Bauteil axial verschiebt.

Ebenfalls sind Planetengetriebe mit einem Sonnenrad, Planetenrädern, die mit dem Sonnenrad kämmen und bei einem Drehantrieb um das Sonnenrad umlaufen, und mit einem das Sonnenrad konzentrisch umschließenden Hohlrad, mit dem die Planetenräder ebenfalls kämmen und in dem sie bei einem Drehantrieb und umlaufen, bekannt. Die Planetenräder sind exzentrisch und drehbar an einem Planetenträger angeordnet, der gleichachsig zum Sonnenrad und zum Hohlrad angeordnet ist.

Die Offenlegungsschrift DE 102 55 198 A1 offenbart einen Druckerzeuger für eine hydraulische Fahrzeugbremsanlage mit einem Elektromotor, einem Kugelgewindetrieb und einer Kolben-Zylinder-Einheit, deren Kolben von einer drehfesten und verschiebbaren Spindelmutter des Kugelgewindetriebs verschoben wird. Der Elektromotor ist als Hohlwellenmotor ausgebildet und umschließt den Kugelgewindetrieb. Eine Spindel des Kugelgewindetriebs ist drehfest mit einer Stirnwand eines hohlen Rotors des Elektromotors und stützt sich über ein axiales Rollenlager an einem Grund eines topfförmigen Getriebegehäuses ab, das zwischen dem hohlen Rotor des Hohlwellenmotors und der Spindelmutter des Kugelgewindetriebs angeordnet ist.

Die Patentanmeldung JP 2010-269 795 A offenbart eine schlupfgeregelte, hydraulische Fahrzeugbremsanlage mit elektromechanischen Parkbremsen als zusätzlichen Radbremsen an zwei Fahrzeugrädern. Die Parkbremsen weisen einen Elektromotor auf, der über ein zweistufiges Planetengetriebe ein Schraubgetriebe zum Zuspannen der Radbremse antreibt.

Eine ähnliche elektromechanische Radbremse offenbart die Offenlegungsschrift DE 198 51 670 A1, bei der mit Magnetkupplungen Stufen eines zweistufigen Planetengetriebes schaltbar sind, so dass ein schneller Antrieb zum Überwinden eines Lüftspiels und eine große Drehzahlunter- und -momentenübersetzung zu einem Zuspannen möglich sind.

Die Patentanmeldung GB 2.377 740 A offenbart einen elektromechanischen Aktuator mit einem zweistufigen Planetengetriebe, das mit einem Elektromotor antreibbar ist, und einem Kugelgewindetrieb, der vom Planetengetriebe angetrieben wird. Der Kugelgewindetrieb, das Planetengetriebe und der Elektromotor sind gleichachsig hintereinander angeordnet.

### Offenbarung der Erfindung

Der erfindungsgemäße Druckerzeuger mit den Merkmalen des Anspruchs 1 weist eine Kolben-Zylinder-Einheit mit einem Zylinder und einem in dem Zylinder verschiebbaren Kolben auf. Durch eine Verschiebung des Kolbens relativ zum Zylinder in den Zylinder hinein lässt sich ein hydraulischer Druck aufbauen und Bremsflüssigkeit verdrängen bzw. fördern. Beim erfindungsgemäßen Druckerzeuger ist der Kolben oder der Zylinder mit einem axial verschiebbaren Bauteil eines Schraubgetriebes verbunden, so dass ein Drehantrieb eines drehbaren Bauteils des Schraubgetriebes das axial verschiebbare Bauteil des Schraubgetriebes axial verschiebt und über das axial verschiebbare Bauteil den Kolben der Kolben-Zylinder-Einheit in Bezug auf den Zylinder verschiebt. Auf diese Weise lässt sich ein hydraulischer Druck erzeugen bzw. Bremsflüssigkeit verdrängen bzw. fördern.

Zum Drehantrieb des drehbaren Bauteils des Schraubgetriebes weist der erfindungsgemäße Druckerzeuger ein Planetengetriebe auf, wobei erfindungsgemäß das drehbare Bauteil des Schraubgetriebes einen Planetenträger des Planetengetriebes bildet. Insbesondere eignet sich eine Spindelmutter oder allgemein ein ein Innengewinde aufweisendes Hohlteil des Schraubgetriebes als Planetenträger zur drehbaren und exzentrischen Befestigung der Planetenräder des Planetengetriebes mit gleichem Abstand von einer Drehachse.

Die Unteransprüche haben vorteilhafte Ausgestaltungen und Weiterbildungen der im Anspruch 1 angegebenen Erfindung zum Gegenstand.

Anspruch 2 sieht einen hohlen, beispielsweise rohrförmigen Zugverbinder vor, in dem das Schraubgetriebe, zumindest ein Teil einer Länge des Schraubgetriebes, und eventuell zusätzlich das Planetengetriebe platzsparend untergebracht ist und der das Schraubgetriebe mit der Kolben-Zylinder-Einheit verbindet. Das drehbare Bauteil des Schraubgetriebes ist axial fest mit dem Zugverbinder und der Zylinder oder der Kolben der Kolben-Zylinder-Einheit ist unmittelbar oder mittelbar über ein oder mehrere Bauteile mit dem Zugverbinder verbunden. Es ist das Teil der Kolben-Zylinder-Einheit mit dem Zugverbinder verbunden, das nicht mit dem axial verschiebbaren Bauteil des Schraubgetriebes verbunden ist. Erzeugt der Kolben der Kolben-Zylinder-Einheit durch eine Verschiebung relativ zum Zylinder in den Zylinder hinein einen hydraulischen Druck verursacht das eine Druckkraft auf das axial verschiebbare Bauteil des Schraubgetriebes und als Reaktionskraft eine Zugkraft im Zugverbinder, die der Zugverbinder auf das drehbare Bauteil des Schraubgetriebes überträgt, das mit dem Zugverbinder axial fest ist. Zug- und Druckkräfte, die zur Druckerzeugung aufgebracht werden müssen oder als Reaktionskräfte wirken, werden auf diese Weise geschlossen als innere Kräfte innerhalb des Schraubgetriebes und der Kolben-Zylinder-Einheit geführt, so dass keine Kräfte nach außen wirken.

Zu einem kompakten Aufbau des Druckerzeuges sieht Anspruch 4 eine Ausbildung des Kolbens der Kolben-Zylinder-Einheit als Hohlkolben vor, in dem das axial verschiebbare Bauteil des Schraubgetriebes koaxial angeordnet ist. Das Schraubgetriebe kann zumindest zum Teil in dem als Hohlkolben angeordnet sein.

Ebenfalls zu einem kompakten Aufbau des Druckerzeugers sieht Anspruch 6 einen Elektro-Hohlwellenmotor vor, mit dem das Planetengetriebe drehbar antreibbar ist und in dem das Schraubgetriebe und/oder das Planetengetriebe zumindest zum Teil untergebracht ist. "Zum Teil" bedeutet insbesondere in Bezug auf das Schraubgetriebe, dass ein Teil einer Länge des Schraubgetriebes im Hohlwellenmotor untergebracht ist und das Schraubgetriebe aus dem Hohlwellenmotor vorsteht.

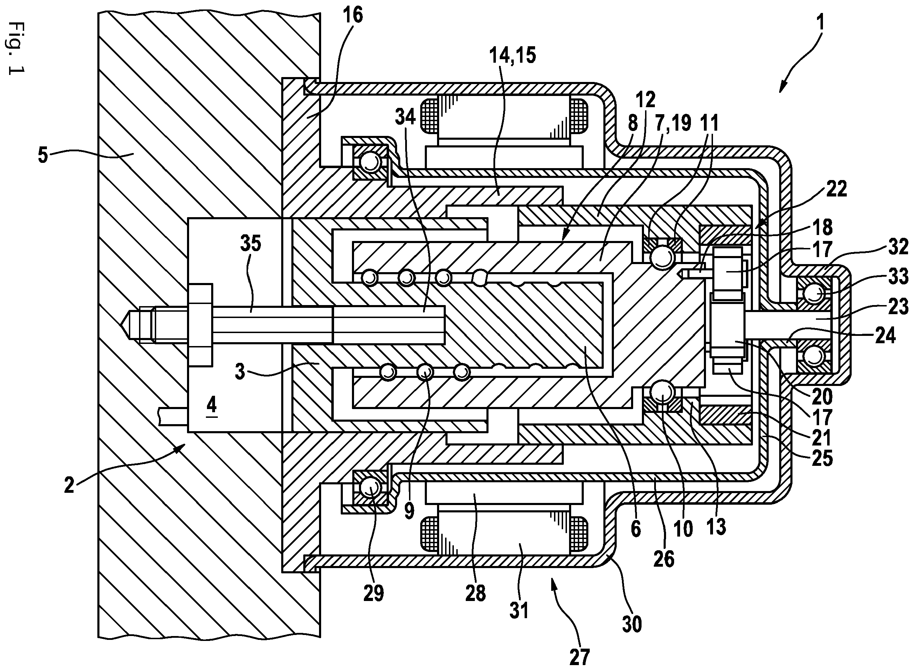

### Kurze Beschreibung der Zeichnung

Weitere Merkmale der Erfindung ergeben sich aus der folgenden Beschreibung einer Ausführungsform der Erfindung in Verbindung mit den Ansprüchen und der Zeichnung.

Die einzige Figur zeigt einen Achsschnitt eines erfindungsgemäßen Druckerzeugers.

### Ausführungsform der Erfindung

Der in der Zeichnung dargestellte Druckerzeuger 1 gemäß der Erfindung dient zur Druckerzeugung in einer hydraulischen Fremdkraftbremsanlage. Möglich ist auch die Verwendung für eine Schlupfregelung. Der Druckerzeuger 1 weist eine Kolben-Zylinder-Einheit 2 mit einem Kolben 3 und einem Zylinder 4 auf, der als zylindrische Ansenkung in einem Hydraulikblock 5 der im Übrigen nicht dargestellten Fahrzeugbremsanlage ausgeführt ist. Der Hydraulikblock 5 dient zur mechanischen Halterung und zur hydraulischen Verschaltung hydraulischer Bauelemente einer Schlupfregelung der Fahrzeugbremsanlage wie Magnetventile, Rückschlagventile, Hydrospeicher und der Kolben-Zylinder-Einheit 2. Solche Hydraulikblöcke 5 für schlupfgeregelte Fahrzeugbremsanlagen sind bekannt und sollen hier nicht näher erläutert werden. In einer Fremdkraftbremsanlage dient die Kolben-Zylinder-Einheit 2 zu einem Druckaufbau anstelle eines fuß- oder handbetätigten Hauptbremszylinders, der für eine Fremdkraftbremsung als Bremskraft-Sollwertgeber dient und mit dem ein Bremsdruck für eine Hilfsbremsung bei Ausfall der Fremdkraftbremse erzeugbar ist.

Der Kolben 3 der Kolben-Zylinder-Einheit 2 ist als Hohlkolben ausgeführt und weist eine in ihm koaxial angeordnete und starr verbundene Spindel 6 auf. Die Spindel 6 ist koaxial in einer Spindelmutter 7 angeordnet, die in den hohl ausgeführten Kolben 3 ragt. Durch einen Drehantrieb der drehbaren und axial festen Spindelmutter 7 wird die Spindel 6 und mit ihr der Kolben 3 axial verschoben, so dass der Kolben 3 einen hydraulischen Druck im Zylinder 4 erzeugt. Zusammen bilden die Spindel 6 und die Spindelmutter 7 ein Schraubgetriebe. In der dargestellten Ausführungsform ist das Schraubgetriebe als Kugelgewindetrieb ausgeführt mit Kugeln 9 als Wälzkörpern, die in wendelförmigen Rillen wälzen, die als Gewinde- und Gegengewinde auf der Spindel 6 und in der Spindelmutter 7 ausgebildet sind. Allgemein können die Spindel 6 und die Spindelmutter 7 als Bauteile des Schraubgetriebes 8 aufgefasst werden, wobei die Spindelmutter 7 ein drehbares, axialfestes und ein Gewinde aufweisendes Bauteil des Schraubgetriebes 8 und die Spindel 6 ein axial verschiebbares, drehfestes und ein Gegengewinde aufweisendes Bauteil des Schraubgetriebes 8 bilden. In der Ausführungsform als Kugelgewinde stehen das Gewinde der Spindelmutter 7 und das Gegengewinde der Spindel 6 mittelbar über die Kugeln 9 in Eingriff, so dass wie bereits geschrieben ein Drehantrieb der Spindelmutter 7 die Spindel 6 mit dem Kolben 3 axial verschiebt. Denkbar ist bei Ausführungsformen der Erfindung auch eine Umkehrung, d. h. eine drehbare und axialfeste Spindel und eine drehfeste und axial verschiebliche Spindelmutter (nicht dargestellt), wobei in diesem Fall die Spindelmutter mit dem Kolben 3 verbunden, beispielsweise auch einstückig ist und diesen bei einem Drehantrieb der Spindel verschiebt.

Die Spindelmutter 7 ist mit einem Drehlager 10 drehbar gelagert und axial fest gehalten. In der Ausführungsform ist das Drehlager 10 an einem dem Kolben 3 fernen Ende der Spindelmutter 7 angeordnet und als Vierpunktlager ausgeführt. Lagerringe 11 des als Vierpunktlager ausgeführten Drehlagers 10 der Spindelmutter 7 sind in einer Lageraufnahme eines rohrförmigen Zugankers 12 angeordnet, wobei sich einer der beiden Lagerringe 11 axial an einem Bund 13 innen im Zuganker 12 abstützt. Der Bund 13 kann auch als axiales Widerlager für das Drehlager 10 der Spindelmutter 7 aufgefasst werden. Der rohrförmige Zuganker 12 ist fest mit einem rohrförmigen Kragen 14 eines Flanschteils 15 verbunden, das einen Flansch 16 aufweist, der in einer Ansenkung des Hydraulikblocks 5 befestigt ist. Das Flanschteil 15 ist koaxial mit dem Zylinder 4, dem Kolben 3, der Spindel 6 und der Spindelmutter 7, der Kragen 14 des Flanschteils 15 führt den Kolben 3 axial verschiebbar. In der Ausführungsform ist der rohrförmige Zuganker 12 durch Einpressen in den Kragen 14 starr mit diesem bzw. dem Flanschteil 15 verbunden. Andere Verbindungsmöglichkeiten sind möglich. Wird der Kolben 3 zur Druckerzeugung in den Zylinder 4 hineinverschoben, wirkt eine Druckkraft auf die Spindel 6 und auf die Spindelmutter 7, die sich axial über das Drehlager 10 am Bund 13 im Innern des Zugankers 12 abstützt. Der Zuganker 12 ist fest mit dem Flanschteil 15 und dieses wiederum mit dem Hydraulikblock 5 verbunden, so dass eine Zugkraft, die als Reaktionskraft auf die Druckkräfte in der Spindel 6 und in der Spindelmutter 7 entstehen, auf direktem Weg über den Zuganker 12, den Kragen 14 und den Flansch 16 des Flanschteils 15 in den Hydraulikblock 5 eingeleitet werden, der den Zylinder 4 aufweist. Die bei der Druckerzeugung auftretenden Druck- und Zugkräfte werden auf diese Weise auf kurzem Weg als innere Kräfte in einem geschlossenen Kreis geführt, so dass keine Kräfte nach außen wirken, die abgestützt werden müssen.

Die Spindelmutter 7 weist an ihrem dem Kolben 3 fernen Ende drei Planetenräder 17 auf, die mit Stiften 18 drehbar an der Spindelmutter 7 angeordnet sind. Auf diese Weise bildet die Spindelmutter 7 einen Planetenträger 19 für die Planetenräder 17. Die Planetenräder 17 kämmen mit einem koaxial angeordneten Sonnenrad 20 und einem ebenfalls koaxialen Hohlrad 21, das die Planetenräder 17 umschließt. Das Hohlrad 21 ist auf einer dem Drehlager 10 der Spindelmutter 7 abgewandten Seite des Bundes 13 in den rohrförmigen Zuganker 12 eingepresst, d. h. das Hohlrad 21 ist drehfest. Die Planetenräder 17, das Sonnenrad 20 und das Hohlrad 21 bilden ein Planetengetriebe 22 des erfindungsgemäßen Druckerzeugers 1, das zu einem Drehantrieb der Spindelmutter 7 dient.

Das Sonnenrad 20 ist drehfest mit einer Welle 23, die drehfest in einen Kragen 24 in einer Stirnwand 25 einer napfförmigen Hohlwelle 26 eines Elektro-Hohlwellenmotors 27 eingepresst ist. Die Hohlwelle 26 weist außen Pole oder Permanentmagnete 28 auf und kann auch als Rotor des Elektro-Hohlwellenmotors 27 aufgefasst werden. Die Hohlwelle 26 umschließt das Planetengetriebe 22, das Schraubgetriebe 8, den Zuganker 12 und den Kragen 14 des Flanschteils 15 konzentrisch. Sie ist nahe dem Flansch 16 mit einem Kugellager als Drehlager 29 drehbar gelagert.

Der Elektro-Hohlwellenmotor 27 weist ein ebenfalls napfförmiges und durchmessergestuftes Motorgehäuse 30 auf, dessen offenes Ende am Flansch 16 des Flanschteils 15 befestigt ist. An einer Innenseite weist das Gehäuse 30 Elektromagnete als Statormagnete 31 auf. Das Motorgehäuse 30 mit den Statormagneten 31 kann auch als Stator des Elektro-Hohlwellenmotors 27 aufgefasst werden. An einem dem Flansch 16 abgewandten, geschlossenen Ende ist eine hohlzylindrische Lageraufnahme 32 am Motorgehäuse 30 ausgebildet, in der ein Kugellager als Drehlager 33 angeordnet ist. Mit dem Drehlager 33 ist die Welle 23 drehbar gelagert, mit der das Sonnenrad 20 des Planetengetriebes 22 drehfest und die durch Einpressen in den Kragen 24 der Hohlwelle 26 drehfest mit der Hohlwelle 26 ist. Das Drehlager 23 lagert somit sowohl die Hohlwelle 26 des Elektro-Hohlwellenmotors 27 an dem dem Flansch 16 fernen Ende und zugleich das Sonnenrad 20 des Planetengetriebes 22 drehbar. Bei einem Drehantrieb der Hohlwelle 26 des Elektro-Hohlwellenmotors 27 wird das mit der Hohlwelle 26 drehfeste Sonnenrad 20 des Planetengetriebes 22 drehend angetrieben und treibt die Planetenräder 17 zu einer Umlaufbewegung an, die einen Drehantrieb der Spindelmutter 7 bewirkt, die wie beschrieben zugleich den Planetenträger 19 des Planetengetriebes 22 bildet.

Zur Drehsicherung weisen der Kolben 3 und die Spindel 6 ein axiales Sackloch 34 mit einem Sechskantquerschnitt auf, in das ein Sechskantstab 35 ragt, der am Grund des Zylinders 4 drehfest in den Hydraulikblock 5 geschraubt ist.

## Patentansprüche

1. Druckerzeuger für eine hydraulische Fahrzeugbremsanlage, mit einem Schraubgetriebe (8), das ein drehbares, axialfestes, ein Gewinde aufweisendes Bauteil (7) und ein axial verschiebbares, drehfestes, ein Gegengewinde aufweisendes Bauteil (6) aufweist, dessen Gegengewinde mit dem Gewinde des drehbaren Bauteils (7) in Eingriff steht, so dass ein Drehantrieb des drehbaren Bauteils (7) das axial verschiebbare Bauteil (6) axial verschiebt, und mit einer Kolben-Zylinder-Einheit (2), die einen Zylinder (4) und einen in dem Zylinder (4) verschiebbaren Kolben (3) aufweist, wobei der Kolben (3) oder der Zylinder (4) mit dem axial verschiebbaren Bauteil (6) des Schraubgetriebes (8) verbunden ist, so dass ein Drehantrieb des drehbaren Bauteils (7) des Schraubgetriebes (8) über das axial verschiebbare Bauteil (6) des Schraubgetriebes (8) den Kolben (3) der Kolben-Zylinder-Einheit (2) relativ zum Zylinder (4) verschiebt, **dadurch gekennzeichnet, dass** der Druckerzeuger (1) ein Planetengetriebe (22) zu einem Drehantrieb des drehbaren Bauteils (7) des Schraubgetriebes (8) aufweist und dass das drehbare Bauteil (7) des Schraubgetriebes (8) einen Planetenträger (19) des Planetengetriebes (22) bildet.

2. Druckerzeuger nach Anspruch 1, **dadurch gekennzeichnet, dass** der Druckerzeuger (1) einen hohlen Zugverbinder (12) aufweist, in dem das Schraubgetriebe (8) untergebracht ist, mit dem das drehbare Bauteil (7) des Schraubgetriebes (8) axial fest und der Zylinder (4) oder der Kolben (3) der Kolben-Zylinder-Einheit (2) verbunden ist.

3. Druckerzeuger nach Anspruch 2, **dadurch gekennzeichnet, dass** ein Hohlrad (21) des Planetengetriebes (22) drehfest in dem Zugverbinder (12) angeordnet ist.

4. Druckerzeuger nach Anspruch 1, **dadurch gekennzeichnet, dass** der Kolben (3) der Kolben-Zylinder-Einheit (2) ein Hohlkolben und das axial verschiebbare Bauteil (6) des Schraubgetriebes (8) koaxial im Kolben (3) angeordnet ist.

5. Druckerzeuger nach Anspruch 1, **dadurch gekennzeichnet, dass** der Kolben (3) der Kolben-Zylinder-Einheit (2) axial verschiebbar im Zylinder (4) der Kolben-Zylinder-Einheit (2) und/oder einem am Zylinder (4) der Kolben-Zylinder-Einheit (2) angeordneten Teil (14, 15) geführt ist.

6. Druckerzeuger nach Anspruch 1, **dadurch gekennzeichnet, dass** der Druckerzeuger (1) einen Elektro-Hohlwellenmotor (27) zum Drehantrieb des Planetengetriebes (22) aufweist, in dem das Schraubgetriebe (8) und/oder das Planetengetriebe (22) zumindest zum Teil untergebracht ist.

7. Druckerzeuger nach Anspruch 6, **dadurch gekennzeichnet, dass** ein Sonnenrad (20) des Planetengetriebes (22) drehfest mit einer Hohlwelle (26) des Elektro-Hohlwellenmotors (27) ist.

8. Druckerzeuger nach Anspruch 1, **dadurch gekennzeichnet, dass** der Elektro-Hohlwellenmotor (27) eine topfförmige Hohlwelle (26) mit einem Drehlager (33) an einer Außenseite einer Stirnwand (25) aufweist.

## Claims

1. Pressure generator for a hydraulic vehicle brake system, having a helical gear mechanism (8) which has a rotatable, axially fixed component (7) having a thread and has an axially displaceable, rotationally fixed component (6) having a mating thread, the mating thread of the latter component engaging with the thread of the rotatable component (7) such that rotational driving of the rotatable component (7) axially displaces the axially displaceable component (6), and having a piston-cylinder unit (2) which has a cylinder (4) and has a piston (3) which is displaceable in the cylinder (4), wherein the piston (3) or the cylinder (4) is connected to the axially displaceable component (6) of the helical gear mechanism (8) such that rotational driving of the rotatable component (7) of the helical gear mechanism (8) displaces the piston (3) of the piston-cylinder unit (2) relative to the cylinder (4) via the axially displaceable component (6) of the helical gear mechanism (8), **characterized in that** the pressure generator (1) has a planetary gear mechanism (22) for rotational driving of the rotatable component (7) of the helical gear mechanism (8), and **in that** the rotatable component (7) of the helical gear mechanism (8) forms a planet carrier (19) of the planetary gear mechanism (22).

2. Pressure generator according to Claim 1, **characterized in that** the pressure generator (1) has a hollow tensile connector (12) in which the helical gear mechanism (8) is accommodated and to which the rotatable component (7) of the helical gear mechanism (8) is connected in an axially fixed manner and the cylinder (4) or the piston (3) of the piston-cylinder unit (2) is connected.

3. Pressure generator according to Claim 2, **characterized in that** a ring gear (21) of the planetary gear mechanism (22) is arranged in a rotationally fixed manner in the tensile connector (12) .

4. Pressure generator according to Claim 1, **characterized in that** the piston (3) of the piston-cylinder unit (2) is a hollow piston, and the axially displaceable component (6) of the helical gear mechanism (8) is arranged coaxially in the piston (3).

5. Pressure generator according to Claim 1, **characterized in that** the piston (3) of the piston-cylinder unit (2) is guided in an axially displaceable manner in the cylinder (4) of the piston-cylinder unit (2) and/or in a part (14, 15) arranged on the cylinder (4) of the piston-cylinder unit (2).

6. Pressure generator according to Claim 1, **characterized in that** the pressure generator (1) has an electric hollow shaft motor (27) for rotationally driving the planetary gear mechanism (22), in which the helical gear mechanism (8) and/or the planetary gear mechanism (22) are/is at least partially accommodated.

7. Pressure generator according to Claim 6, **characterized in that** a sun gear (20) of the planetary gear mechanism (22) is rotationally conjoint with respect to a hollow shaft (26) of the electric hollow shaft motor (27).

8. Pressure generator according to Claim 1, **characterized in that** the electric hollow shaft motor (27) has a pot-shaped hollow shaft (26) having a rotary bearing (33) on an outer side of an end wall (25).

## Revendications

1. Générateur de pression destiné à un système de freinage hydraulique de véhicule, comprenant un engrenage hélicoïdal (8) présentant un composant rotatif (7), axialement fixe et présentant un filetage, et un composant axialement mobile (6), verrouillé en rotation et présentant un contre-filetage, ledit contre-filetage étant en prise avec le filetage du composant rotatif (7) de sorte qu'un entraînement en rotation du composant rotatif (7) déplace le composant (6) axialement mobile, et comprenant une unité piston-cylindre (2) qui présente un cylindre (4) et un piston (3) mobile dans le cylindre (4), le piston (3) ou le cylindre (4) étant relié au composant (6) axialement mobile de l'engrenage hélicoïdal (8) de telle sorte qu'un entraînement en rotation du composant rotatif (7) de l'engrenage hélicoïdal (8) déplace le piston (3) de l'unité piston-cylindre (2) par rapport au cylindre (4) par l'intermédiaire du composant (6) axialement mobile, **caractérisé en ce que** le générateur de pression (1) présente un engrenage planétaire (22) par rapport à un entraînement en rotation du composant rotatif (7) de l'engrenage hélicoïdal (8), et **en ce que** le composant rotatif (7) de l'engrenage hélicoïdal (8) forme un porte-satellites (19) de l'engrenage planétaire (22).

2. Générateur de pression selon la revendication 1, **caractérisé en ce que** le générateur de pression (1) présente un raccord de traction creux (12) dans lequel est logé l'engrenage hélicoïdal (8) avec lequel le composant rotatif (7) de l'engrenage hélicoïdal (8) est axialement fixe et auquel est relié le cylindre (4) ou le piston (3) de l'unité piston-cylindre (2).

3. Générateur de pression selon la revendication 2, **caractérisé en ce qu'**une couronne (21) de l'engrenage planétaire (22) est disposée de manière verrouillée en rotation dans le raccord de traction (12).

4. Générateur de pression selon la revendication 1, **caractérisé en ce que** le piston (3) de l'unité piston-cylindre (2) est un piston creux et le composant (6) axialement mobile de l'engrenage hélicoïdal (8) est disposé coaxialement dans le piston (3).

5. Générateur de pression selon la revendication 1, **caractérisé en ce que** le piston (3) de l'unité piston-cylindre (2) est guidé de manière axialement mobile dans le cylindre (4) de l'unité piston-cylindre (2) et/ou dans une pièce (14, 15) disposée sur le cylindre (4) de l'unité piston-cylindre (2).

6. Générateur de pression selon la revendication 1, **caractérisé en ce que** le générateur de pression (1) présente un moteur électrique à arbre creux (27) pour l'entraînement en rotation de l'engrenage planétaire (22) dans lequel l'engrenage hélicoïdal (8) et/ou l'engrenage planétaire (22) sont logés au moins en partie.

7. Générateur de pression selon la revendication 6, **caractérisé en ce qu'**une roue solaire (20) de l'engrenage planétaire (22) est verrouillée en rotation avec un arbre creux (26) du moteur électrique à arbre creux (27).

8. Générateur de pression selon la revendication 1, **caractérisé en ce que** le moteur électrique à arbre creux (27) présente un arbre creux en forme de cuvette (26) muni d'un palier rotatif (33) sur une face extérieure d'une paroi frontale (25).
